# EUROPEAN PATENT SPECIFICATION

(11) **EP 4 183 632 B1**
(45) Date of publication and mention of the grant of the patent: **01.01.2025**
(21) Application number: 22207606.9
(22) Date of filing: 15.11.2022
(51) Int. Cl.: B60R 5/04, B60R 13/01

(54) **RETAINING SYSTEM FOR RETAINING A LOAD FLOOR OF A VEHICLE AND METHOD OF MANUFACTURING A LOAD FLOOR FOR THIS RETAINING SYSTEM**
HALTESYSTEM ZUM HALTEN EINES LADEBODENS EINES FAHRZEUGS UND VERFAHREN ZUR HERSTELLUNG EINES LADEBODENS FÜR DIESES HALTESYSTEM
SYSTÈME DE RETENUE POUR RETENIR UN PLANCHER DE CHARGEMENT D'UN VÉHICULE ET PROCÉDÉ DE FABRICATION D'UN PLANCHER DE CHARGEMENT POUR CE SYSTÈME DE RETENUE

(30) Priority: 18.11.2021 ES 202131077
(43) Date of publication of application: 24.05.2023
(73) Proprietor: Seat, S.A., 08760 Martorell (ES)
(72) Inventor: COLET GALÍ, Joan, Martorell (ES); MARTINEZ-SEARA, Oscar, Martorell (ES); FERNANDEZ ALBA, Manuel, Martorell (ES)
(74) Representative: Pons

(56) References cited:
- EP-A1- 1 806 261
- EP-A1- 2 522 550
- WO-A1-2017/164828
- DE-A1- 102011 010 458
- DE-A1- 102017 205 533
- DE-A1- 3 332 695
- ES-U- 1 142 933
- KR-A- 20180 046 186

## Description

### Object of the invention

The present invention relates to a retaining system for retaining a load floor of a vehicle according to claim 1, for example, a system comprising a load floor and associated parts of a rear compartment of a vehicle, wherein the load floor can be pivoted from a first substantially horizontal usage position (closed position), to a second usage position (open position) with an inclination with respect to the first usage position. In particular, the retaining system of the present invention allows the load floor to be automatically and intuitively retained and maintained in its second usage open position, which is necessary for a user to be able to automatically support it and to therefore free both his or her hands in order to be able to comfortably maneuver and handle the space below the load floor.

### Background of the invention

Most road vehicles include a rear compartment, also referred to as a trunk, located in the rear of the vehicle, for transporting all kinds of objects, shopping, and the like.

The rear compartment often includes a load floor (also referred to as a double floor) which can have different height positions, usually a lower position directly in contact with the bottom of the trunk floor, and a second position flush with the loading edge of the trunk. In both upper and lower positions, the load floor is arranged in a position that is substantially horizontal or parallel to the rolling surface of the vehicle. Shopping and luggage are placed on the load floor during normal use of the vehicle, and tools or other objects that are to be kept away from view or not in use, for example, can be placed in the space below the load floor. Additionally, objects of another type such as spare wheels of the vehicle or material necessary for tire changing operations are placed in a cabin arranged under the bottom of the trunk floor.

The mentioned load floor of the vehicle trunk is usually assembled in a pivotable manner between at least two different usage positions, a first substantially horizontal position in which the space below the load floor is closed, to a second usage position with an inclination with respect to the first usage position in which the space below the load floor is open and accessible to a user. In this way, the user lifts the load floor and securely supports it in the second open position in order to gain access, for example, to tools or parts or items of another type located in the space below the load floor.

In the state of the art there are different solutions for automatically retaining and maintaining the load floor, i.e., said load floor supports itself in its second open usage position, so that a user can have both his or her hands free to comfortably handle the space below the load floor, said load floor being supported in said inclined position.

Possible solutions currently available for this purpose are: a latch on the tray support or side wall of the trunk that can be extracted to support the double floor, a hook that can be lowered for the same purpose, and a cord or rubber band ending in a hook integrally attached to the double floor that can be hung on a flange of the trunk roof. The first and second solutions (latch and hook) present a complex operation both for supporting and releasing them; and the cord or rubber band with a hook also presents a complex operation and is not very robust, as the fixing of the double floor in the open position is not very stable. In general, making the load floor of a vehicle more complex also runs the risk of increasing its cost, making the entire vehicle more expensive to manufacture.

Retaining systems for retaining the double floor in a horizontal position, for example, on horizontal supports or bearing elements, are also known. However, in terms of stress, it is different to maintain and retain a double floor in an inclined position than in a horizontal position (in a support situation).

Patent ES2537931, belonging to the same proprietor, discloses a solution consisting of a groove in the double floor support through which said double floor folded on itself is introduced. However, this solution can only be used in certain trunk configurations as it requires a free space below the loading plane in order to allow the floor to be introduced through the groove of the support.

It is intended that the support of the load floor of the rear compartment in its open inclined position is completely reliable for the user in the sense that the double floor can be efficiently retained in the open position without the possibility of it falling, that the action of fixing the load floor in its open position and unfixing it is comfortable and simple for the user, and that the assembly of the different components making up the retaining system for retaining a double floor within the space of the trunk is easy and simple, and that said components are cost-effective to manufacture and assemble. EP 2 522 550 shows a retaining system according to the preamble of claim 1. ES1142933U shows a load floor with an elastic portion.

It is therefore necessary to offer an alternative to the state of the art covering the shortcomings found therein by providing an alternative to the retaining systems for retaining a double floor in an open inclined position within the space of the trunk existing in the state of art, which system can be fixed and unfixed by the user in an easy and simple manner, while being durable, reliable, and cost-effective to manufacture.

### Description of the invention

The first object of the present invention is to provide a retaining system for retaining a load floor for a vehicle trunk solving the aforementioned drawbacks and having the advantages described below.

According to a first aspect, the present invention provides a retaining system for retaining a load floor for a vehicle trunk with the features of claim 1.

When reference is made to the term "front", it is understood to mean the direction of travel of the vehicle. In contrast, when reference is made to the term "rear", it is understood to mean the direction opposite the direction of travel of the vehicle. when reference is made to the term "first usage position, with the load floor being arranged forming a substantially horizontal surface", it is understood to mean a position in which the load floor is fixed in a position substantially parallel to a road on which the vehicle is traveling. Furthermore, when reference is made to the term "a second usage position, with the load floor being at least partially arranged with an inclination with respect to the first usage position", it is understood to mean a position in which the load floor is at least partially arranged in a non-horizontal orientation, which can even be a substantially vertical orientation, i.e., a 90° position. The second usage position results from a pivoting movement of the load floor with respect to a front area thereof, with the load floor being handled and operated by the user from the rear area of the said load floor, causing the rear end or area to be raised with respect to the area or front end.

When reference is made to the term "at least partially arranged with an inclination with respect to the first usage position", it refers to the possibility of a part, for example, the front part of the load floor, being stationary and of only a rear part being the one which is articulated and arranged at a certain angle with respect to the horizontal plane. This situation is common in load floors made up of a main body and a flap arranged in the front area of said load floor, the main body and the flap being linked by means of a hinge-type attachment which allows rotation between both. Accordingly, the flap remains in the first usage position, while the main body of the double floor pivots in order to reach the second usage position. By way of non-limiting example, a preferred range of inclination reached in the second usage position of the load floor is comprised between about 35 and 65 degrees with respect to the horizontal plane of the vehicle. These values of inclination are approximate values, given that they depend on the geometry, the length, and the height of the trunk. When the vehicle trunk has smaller dimensions in the direction of travel of the vehicle, the angle of inclination of the double floor is greater, and in contrast, when the trunk has larger dimensions in said direction of travel of the vehicle, the angle of inclination of the double floor can be smaller. However, the double floor can be pivoted to a second usage position arranged up to 90° with respect to the first usage position.

When reference is made to the term "pivoting" the load floor, it refers to a rotational movement with respect to a shaft, wherein this shaft can be the actual front end of the load floor, which contacts the components demarcating the front area of the trunk. Preferably, a hinged flap system is used. This shaft can be spatially located at a relatively short distance behind a lower region of the row of back seats of the vehicle. By way of non-limiting example, said pivoting assembly between the main body and the flap of the load floor can be achieved in different ways: (a) with one or more hinges; (b) with one or more strips of flexible material which can be operated to work like a hinge; or (c) with an elongated transverse rod on a front edge of the load floor, wherein the elongated rod is pivotably received in the corresponding gaps in the inner lateral sides of the vehicle.

The advantageous effect achieved by the retaining system for retaining a load floor of the present invention is the efficient and automatic retention and support of the load floor in a non-horizontal position in the inner space of the vehicle trunk, which is necessary for a user to have both his or her hands free and to comfortably maneuver and handle the space below the load floor.

Other advantages of the solution proposed by the present invention consist of the inner side walls of the vehicle trunk being fixed and rigid, incorporating only one protuberance at the retention point designed for retaining the load floor, and the retractable function of the retaining system is provided in the deformable retaining elements provided in the load floor. Accordingly, the inner side walls of the trunk are not modified, i.e., the introduction of additional movable elements in these walls is not required, which is advantageous because the cost for manufacturing the inner side walls of the trunk is not increased. When reference is made to the term "additional retaining elements for retaining the load floor installed in the inner side walls", it refers to external elements or parts, such as movable components or springs.

For the purpose of the description, directions and orientations are referred to by means of horizontal, transverse, and vertical axes. The horizontal axis "X" refers to the direction of travel of the vehicle, the transverse axis "Y" refers to the direction corresponding to the width of the vehicle, and the vertical axis "Z" refers to the direction perpendicular to the rolling plane of the vehicle, with a vertical orientation.

When reference is made to the deformable retaining elements of the load floor, they are understood to mean elastic deformation areas.

According to a preferred embodiment of the invention, the deformable retaining elements are incorporated during the process of constructing the load floor in each respective retaining area of the load floor and are integrated in the load floor. Therefore, advantageously, the retractable function of the retaining system is not achieved with an additional mechanism, but rather a deformable material is integrated in the load floor itself to create said deformable retaining elements. A load floor is thereby obtained without using additional elements which require additional fixing operations.

Another essential feature for achieving the desired technical effect of the load floor is that the deformable material of the deformable retaining elements is calculated so that, when the load floor is supported in an inclined position on the two protuberances of the inner side walls of the trunk, there is no deformation of said deformable material. The load floor can therefore be supported in and maintain said inclined position.

It is essential that each deformable retaining element deforms if a given pressure is exceeded, but instead maintains its geometry if said pressure is not maintained.

When reference is made to the term "substantially" in the sentence: "substantially maintaining its initial geometry if the pressure value resulting from contact with the respective protuberance is less than a predefined pressure value", it is understood to mean that each respective deformable retaining element can deform partially, but in no case deforms in correspondence with the overlap area with the respective protuberance in direction "Y" corresponding to the width of the vehicle. Accordingly, if the contact pressure does not exceed the predefined pressure value, an interference area between the deformable retaining element and its respective protrusion is maintained.

When reference is made to the term "predefined pressure value" in the sentence: "substantially maintaining its initial geometry if the pressure value resulting from contact with the respective protuberance is less than a predefined pressure value", it must be at least the vertical component of the weight in the contact area between the deformable retaining element and the protuberance, with the load floor in the second usage position, because it must have a margin of tolerances. Therefore, it is necessary for the material not to deform and to substantially maintains its initial geometry, i.e., it is necessary for deformation corresponding to the overlap area with the respective protuberance in direction "Y" not to occur, when the load floor is self-supported in the second usage position. An additional force, i.e., an increase in the vertical component of the force causes the deformation of the retaining element. The value of the "predefined pressure value" must be calculated based on the weight of the load floor, the degree of inclination of the load floor in the second usage position, the dimensions of the deformable element, its density, its compressive force (defining the elastic deformation capacity), the position of the deformable element with respect to the load floor (more towards the front end implies a greater momentum in the second usage position), etc. Therefore, no specific values of the predefined pressure can be specified.

Due to the weight of equipment, shoppings, or another type of items or objects to be placed on the load floor in its first usage position, which can weigh up to, for example, 50 kg, it is necessary for the load floor to be configured with a rigid inner substrate which is strong enough structurally.

According to the present invention, the outer coating of the load floor covers the respective deformable retaining elements. As indicated above, the outer coating at least partially covers the load floor, but in any embodiment of the present invention, said outer coating, usually made of a textile material, covers the deformable retaining elements. It is said that "the outer coating at least partially covers the load floor" because there are surfaces such as, for example, areas of the lower surface which may not be covered by the outer coating. Moreover, the front surface, the side ends, the rear end, and the front end, as well as the deformable retaining elements, are always covered by the outer coating.

According to a preferred mode of the load floor of the present invention, the load floor has a body of little thickness in comparison with the rest of its surface, wherein said surface has at least one front end, a rear end, and two side ends opposite one another. The thickness is typically between 10 and 40 millimeters. The front base or end can be flat or curved, whereas the rear base is preferably flat. The two side ends or bases can be flat or have certain irregularity in the form of steps or inclined portions, depending on the specific configuration of the inner side walls of the trunk of each vehicle model.

According to a preferred mode of the load floor of the present invention, each deformable retaining element of the load floor is arranged on the respective side end of the load floor such that contact with the at least one protrusion only occurs with the respective deformable retaining element of the load floor in the pivoting movement between the first usage position and the second usage position and vice versa.

Preferably, the side ends of the load floor have a complementary geometry with respect to their respective side walls of the trunk. Therefore, during the movement of the load floor between the first usage position and the second usage position, and vice versa, there is a free space or gap measuring a few millimeters in direction "Y" between the outer surface of the inner side wall of the trunk and the respective side end of the load floor. Said free space or gap measuring a few millimeters in direction "Y" is also produced between the outer surface of the inner side wall of the trunk and the respective deformable retaining element, with the exception of the interference area between said deformable retaining element and the respective protuberance. In this way, each deformable retaining element of the load floor contacts the corresponding part of the protuberance, in which overlap between a part of the deformable material of the retaining element and the endmost part of the rigid protuberance occurs. Preferably, the deformable material of each deformable retaining element of the load floor extends further in direction "Y" than the end of the protuberance of the side wall of the trunk, ensuring interference between both components.

Three possible arrangements of the two respective deformable retaining elements are foreseen at each side end of the load floor.

According to a first embodiment of the deformable retaining elements of the load floor, each deformable retaining element is arranged in a side recess provided on each side end of the load floor without protruding in direction "Y" towards the side walls of the trunk with respect to the respective side end of the load floor.

According to a second embodiment of the invention, alternative to the first embodiment described in the preceding paragraph, each deformable retaining element of the load floor is arranged protruding in direction "Y" towards the side walls of the trunk with respect to the respective side end of the load floor.

Furthermore, according to a third embodiment of the invention, alternative to the first embodiment described in the preceding paragraph, each deformable retaining element of the load floor is arranged in a side recess provided on each side end of the load floor and protruding in direction "Y" towards the side walls of the trunk with respect to the respective side end of the load floor. This third embodiment is suitable, for example, in those cases in which a greater depth of the deformable material is required in "Y", this depth being insufficient between the end of the retaining element and the side end of the load floor, so that it is also necessary to have a recess.

According to a preferred mode of the configuration of the deformable retaining elements of the load floor of the second and third embodiments, the depth of each deformable retaining element in direction "Y" is variable, such that the contact areas with the respective protuberance comprise an inclined surface increasing the depth of the retaining element up to a central area of maximum depth in said direction "Y". In this way, the pressure to be exerted is eased, such that the interference area between both components appears progressively, resulting in an increased service life of said components and improving the haptic sensation for the user who handles the double floor.

According to a preferred mode of the load floor of the present invention, each deformable retaining element of the load floor is arranged at a respective point close to each corner of a respective side base with the front base of the load floor. The term "close" should be understood as a point located a few centimeters from the corner.

According to a preferred way of constituting the respective two deformable retaining elements of the load floor, they are manufactured from a deformable material comprising a soft foam incorporated during the process of constructing the load floor. Preferably, the soft foam represents 100% of the deformable material. Furthermore, a polyurethane (PUR) foam with a density comprised between 144 and 176 kg/m3 and a compressive force between 14.4 and 21.6 KPa is preferably selected. Polyurethane foam (also referred to as PUR foam) is a thermosetting, mostly closed-cell polymer. It is a lightweight, low density material. An important aspect is that the PUR foam can be injected into the walls of the existing cavity, using the existing openings and some additional holes. Another relevant aspect to highlight is that the PUR foam is highly resistant to the effects of the passage of time and has a long service life, remaining undamaged for more than 50 years. Preferably, the chosen polyurethane (PUR) foam has a density of 160 kg/m3 (+/-10%) and a compressive force of 18 KPa (+/- 20%).

According to a preferred embodiment of the load floor, the two deformable retaining elements of the load floor, manufactured from a deformable material, are completely covered by the outer coating. This means that the two deformable retaining elements of the load floor are positioned between the rigid inner substrate and the outer coating. In this way, the deformable retaining elements of the load floor are concealed and not visible to a user, thereby improving the visual appearance of the load floor.

According to a first possible embodiment of the load floor, the load floor formed by the rigid inner substrate which is at least partially covered by the outer coating.

Preferably, the rigid inner substrate of the load floor is manufactured from honeycomb-shaped cardboard or from polyurethane with glass fiber or polypropylene. The attainment of the rigid substrate by means of a honeycomb-shaped cardboard is carried out through a process of folding the cardboard in the form of honeycomb cells. Furthermore, the attainment of the rigid substrate by means of polypropylene with glass fiber can be implemented as an injection molded body.

Preferably, the outer coating of the load floor is made of carpet. In turn, the load floor has a low weight, since it must be handled by the person, for example, in order to move it from the first usage position to the second usage position. Therefore, any increase in weight is undesirable because it increases the vehicle's fuel consumption.

According to a second possible embodiment of the load floor, the load floor is formed by a rigid inner substrate which is at least partially covered by an intermediate layer enveloping the rigid inner substrate and said intermediate layer is in turn at least partially covered by the outer coating. Advantageously, this intermediate layer protects the load floor against adverse agents, such as moisture, dirt, etc., which can cause the material of the rigid inner substrate to deteriorate.

Preferably, the intermediate layer of the load floor is made of rigid polyurethane foam.

According to a third possible embodiment of the load floor, the load floor is formed by a rigid inner substrate which is at least partially covered by an intermediate layer enveloping the rigid inner substrate and said intermediate layer is in turn at least partially covered by the outer coating, and furthermore the load floor incorporates between the rigid inner substrate and the intermediate layer an additional glass fiber layer. Advantageously, this additional glass fiber layer gives rigidity and improved mechanical properties to the load floor.

When reference is made to the term "rigid material" of the respective inner side walls of the trunk and also of the respective protuberances of each wall, it is understood to mean any material that is rigid and non-deformable upon contacting the deformable element of the double floor. By way of example, this rigid material can be a polymer material, such as polypropylene (PP) which can optionally incorporate talc or glass fiber filler, although another type of materials with similar properties can be used.

Preferably, this "rigid material" has the characteristics of being easy to shape in order to generate a substantially flat structure or surface ("the side walls of the trunk"), with sufficient rigidity to support the weight of the load elements arranged hanging thereon without deformation or breakage.

Preferably, in reference to the at least one protuberance provided in each inner side wall of the trunk, said protuberance is arranged fixed to its respective inner side wall of the trunk. This means that it is stationary, i.e., there is no relative movement between the inner side wall of the trunk and the protuberance. According to one embodiment, the protuberance of each side can be made from the same rigid material as the inner walls of the trunk.

Preferably, also in reference to the at least one protuberance provided in each inner side wall of the trunk, said protuberance has a geometry with a variable depth in direction "Y", such that the contact areas of each protuberance with the respective deformable retaining element comprise an inclined surface increasing the depth of the retaining element up to a central area of maximum depth in said direction "Y" and then another inclined surface reducing the depth of the retaining element. In this way, the pressure to be exerted is eased, such that the interference area between both components appears progressively, resulting in an increased service life of said components and improving the haptic sensation for the user who handles the double floor.

It is necessary for there to be a coincidence and overlap at the moment of contacting each deformable retaining element of the load floor with the respective rigid protuberance of the inner side walls of the trunk. To that end, the dimensions of the respective deformable retaining elements are easily greater than the dimensions of the protuberance, so as to be able to "absorb" said protuberance completely when one overlaps the other (particularly in a preferred embodiment of the invention in which the soft element does not protrude and is a recess). It is noted that the deformable retaining element deforms mainly in the transverse direction "Y". However, as a result of said interference, there is also a deformation in a direction perpendicular to the interference surface, said direction being substantially parallel to the direction of travel of the load floor between the first usage position and the second usage position, or vice versa.

The second object of the present invention is to provide a vehicle trunk comprising a retaining system for retaining a load floor described above and with the features of claim 11.

Furthermore, a third object of the present invention is to provide a method of manufacturing the retaining system for retaining a load floor for a vehicle trunk defined according to any of claims 1 to 10.

According to a first embodiment of the second step of the method of manufacturing a load floor defined above, obtaining the at least one deformable retaining element is performed by means of a manufacturing step other than the process of obtaining the rigid substrate, such that the step of inserting the at least one deformable retaining element comprises adding said at least one retaining element to the rigid substrate before the step of coating with the outer coating. A step of attaching the deformable retaining element and the respective side end of the load floor by means of applying an adhesive can be added, and said attachment and immobilization between both components are completed by the final coating step.

According to a second embodiment of the second and third steps of the method of manufacturing a load floor defined above, obtaining and inserting the at least one deformable retaining element is performed by means of a single step of applying a deformable material forming the at least one retaining element on the respective side end of said rigid substrate by spraying prior to the step of coating with the outer coating. In this case, an additional adhesive application step is not required.

Preferably, this deformable material is a PUR foam. According to a first embodiment, this PUR foam can be obtained by means of locally applying two PUR foams of different formulations on the inner lining or on the intermediate layer of the load floor so as to achieve a "soft" effect, and then a molding process is performed in which the PUR foams expand to occupy the entire space thereof.

Alternatively, according to a second embodiment, this PUR foam can be obtained by means of an initial process of applying a soft PUR foam on the inner lining or on the intermediate layer of the load floor by spraying, and then a molding process in which the soft PUR foam expands to occupy the entire space thereof.

To better understand what has been set forth above, drawings which schematically depict, only by way of non-limiting example, practical cases of several embodiments of the retaining system for retaining a load floor for a vehicle trunk object of the present invention are attached.

### Brief description of the figures

Figure 1 is a side elevational view of the interior of a vehicle trunk with the retaining system for retaining a load floor and a load floor in the second usage position, according to the present invention.
Figure 2 is a perspective view of a load floor according to the present invention.
Figure 3 is a top plan view of a detail of the left side corner closest to the loading opening of the trunk having a load floor according to the state of the art.
Figure 4 is the same detail as Figure 3, but corresponds in this case to a top plan view of a first embodiment of the load floor according to the present invention.
Figure 5 is a horizontal section view of detail "C" of Figure 4.
Figures 6 and 7 are respective vertical section views along lines A-A and B-B of Figure 5, respectively.
Figure 8 is a top plan view of a detail of the left side corner of the load floor according to a second embodiment of the load floor according to the present invention.
Figure 9 is a horizontal section view of detail "C"' of Figure 8, in which the respective deformable element of said left side of the load floor can be seen.
Figures 10 to 12 are respective vertical section views along lines A-A and B-B of Figure 9, respectively, in which one of the deformable elements of a side end of the load floor can be seen at two different points.
Figure 13 is a side elevational view of the interior of a vehicle trunk incorporating the retaining system for retaining a load floor according to the present invention, and a detailed perspective view of a protuberance arranged in the inner side wall of the trunk.
Figure 14 is a sectioned view along line B-B of Figure 13 of the possible protuberance of the present invention, and in which the area of interference with the deformable element of the load floor in the moment in which both elements contact one another is also schematically depicted.
Figure 15 is a sectioned view along line A-A of Figure 13 of the possible protuberance of the present invention, and in which an end part of the load floor in the moment before both elements contact one another is also depicted.
Figure 16 is the same side elevational view of the interior of a vehicle trunk of Figure 1 incorporating the retaining system for retaining a load floor according to the present invention, in which a detail of a possible embodiment of the protuberance generated in the side wall of the trunk and also a section along line E-E of the side wall of the trunk at the retention point are provided.
Figures 17a to 17c are respective sectioned side elevational views of the interior of a vehicle trunk of Figure 16 at the retention point, and incorporating the retaining system for retaining a load floor according to the present invention, in three different positions of movement from the first usage position to the second usage position.

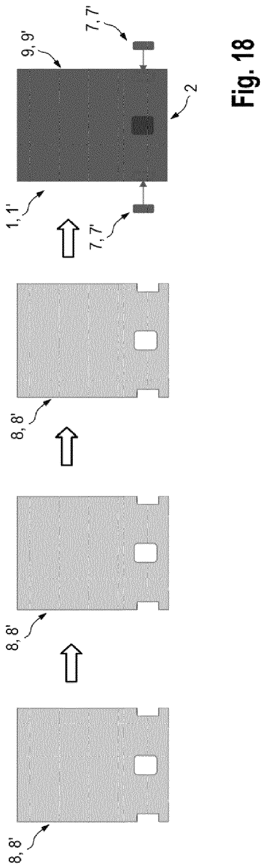

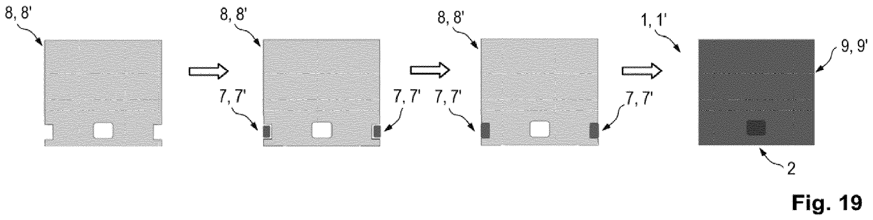

Furthermore, Figures 18 and 19 are respective diagrams of two possible methods of obtaining the double floor with the deformable elements covered by the outer coating.

### Description of exemplary embodiments

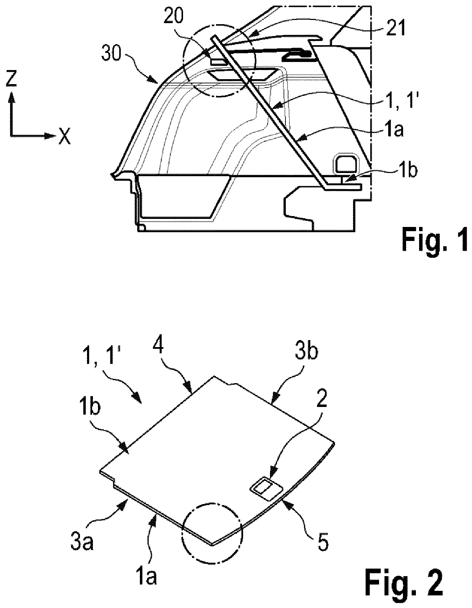

An embodiment of the retaining system for retaining a load floor for a vehicle of the present invention is described below in reference to Figures 1, 2, and 4 to 17.

In particular, Figure 1 depicts, by way of illustration, a side elevational view of the interior of a rear cabin of a vehicle, such as a trunk 30, which incorporates the retaining system for retaining a load floor according to the present invention. Said Figure 1 depicts the load floor 1 in the second usage position, i.e., automatically retained by at least one protuberance 20 in each side wall 21 of the trunk 30, such that a user can have his or her two hands free to comfortably handle the space below the load floor with the load floor 1 being supported. Said Figure 1 only shows one protuberance 20 since it is a side view. In this embodiment of Figure 1, the load floor 1 is articulated in a line close to its rear base, leaving a rear portion 1b fixed without being articulated and a front portion 1a movable between at least two usage positions.

Figure 2 depicts a perspective view of the load floor 1 according to the present invention. Said load floor 1 is depicted in the first usage position, i.e., in a substantially horizontal arrangement. It may have a handle 2 in its front part so as to enable a user to remove and handle it with greater ease between its at least two usage positions. It has a considerably rectangular base, formed by two opposite bases or side ends 3a, 3b, a front base 4, and a rear base 5.

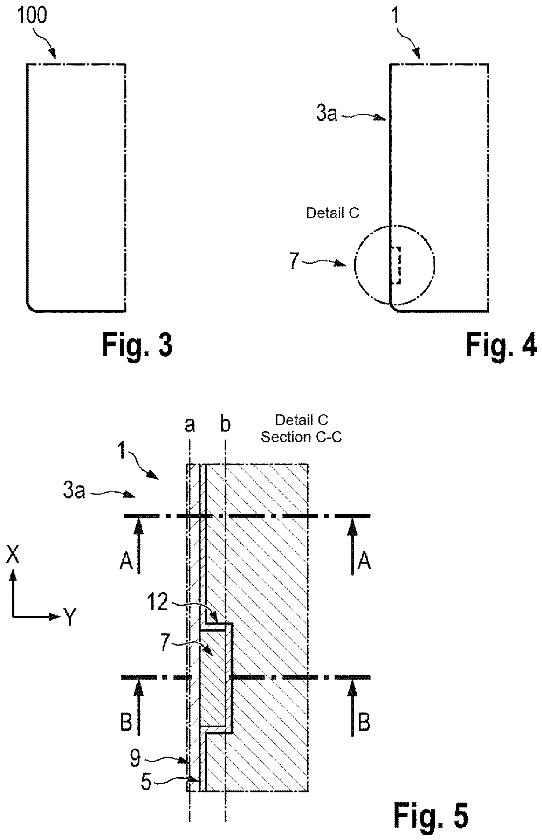

Figure 3 depicts a top plan view of a detail of the left side corner closest to the loading opening of the trunk having a load floor 100 according to the state of the art. No retaining element manufactured in a deformable material is observed in said detail.

In contrast, Figure 4 depicts the same detail as Figure 3, but corresponds in this case to a top plan view of a first embodiment of the load floor 1 according to the present invention, in which the respective deformable element 7 of said left side of the load floor 1 is arranged without protruding from the left side end 3a of the load floor 1.

Figure 5 illustrates a horizontal section view of detail "C" of Figure 4, in which one of the deformable elements 7 of the load floor 1 can be seen, said deformable element 7 being arranged without protruding from the left side end 3a, the deformable element 7 being arranged completely inside a recess 12 made on the left side end 3a up to a certain depth in axis "Y". The deformable element 7 has a length in axis "X" substantially greater than the depth thereof in axis "Y".

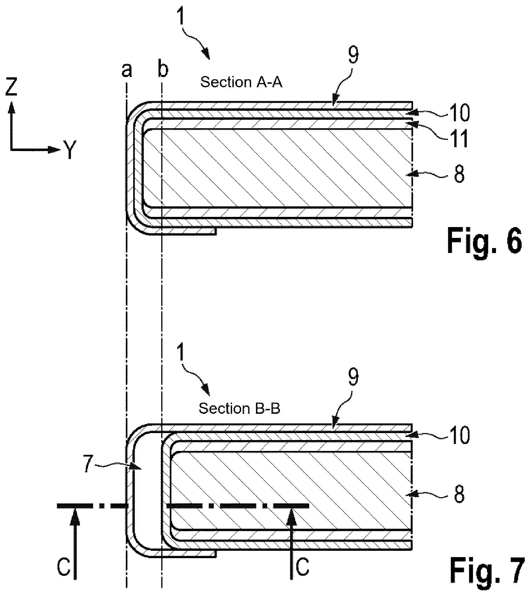

Furthermore, Figures 6 and 7 illustrate respective vertical section views along lines A-A and B-B, respectively, of a part of the load floor 1 of Figure 5. The first figure, i.e., Figure 6, shows the load floor 1 sectioned along a part where there is no deformable element 7, whereas the next figure, i.e., Figure 7, shows the same load floor 1 sectioned along a part where there is a deformable element 7. The deformable element 7 has a length in axis "Z" substantially greater than the depth thereof in axis "Y". As can be seen, in said vertical direction or axis "Z", the deformable element does not protrude from the load floor 1, being aligned with its respective upper and lower surfaces and covered by the outer coating 9.

In this first embodiment of the load floor 1 of the invention, the load floor is formed by a rigid inner substrate 8 at least partially covered by an intermediate layer 10 enveloping the rigid inner substrate 8 and in turn at least partially covered by an outer coating 9 enveloping the intermediate layer 10. Furthermore, an additional glass fiber layer 11 is arranged between the rigid inner substrate 8 and the intermediate layer 10.

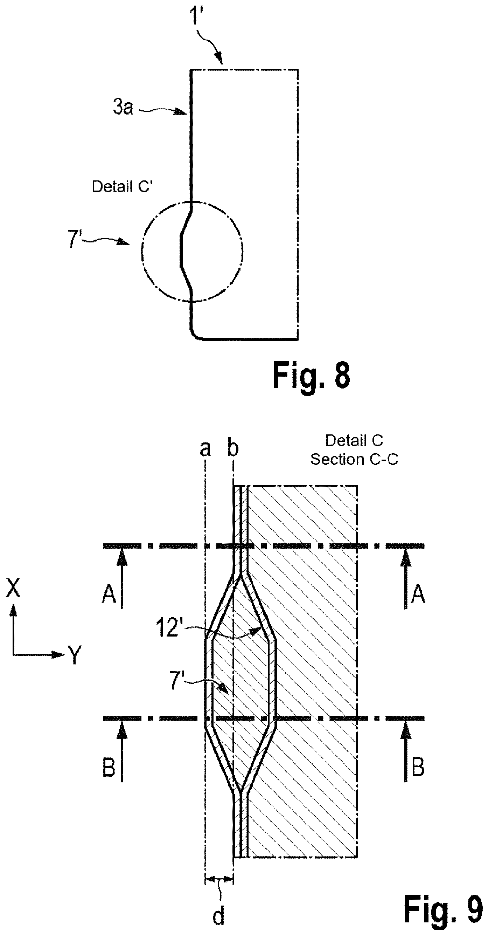

Figure 8 depicts the same detail as Figure 2, but corresponds in this case to a top plan view of a third embodiment of the load floor 1' according to the present invention, in which the respective deformable element 7' of said left side of the load floor 1 protrudes from the left side end 3a of the load floor 1'.

Figure 9 illustrates a horizontal section view of detail "C"' of Figure 8, in which the deformable element 7 of the left side of the load floor 1 can be seen protruding slightly outwards from the left side end 3a in direction "Y" by a distance "d", with the deformable element 7 being arranged partially inside a recess 12' made on the left side end 3a up to a certain depth in axis "Y" and partially protruding in the direction of axis "Y". The deformable element 7' has a length in axis "X" substantially greater than the depth thereof in axis "Y". This distance "d" separating the end of the outer coating from the rest of the coating on the left side end 3a can be comprised between 5 and 10 millimeters.

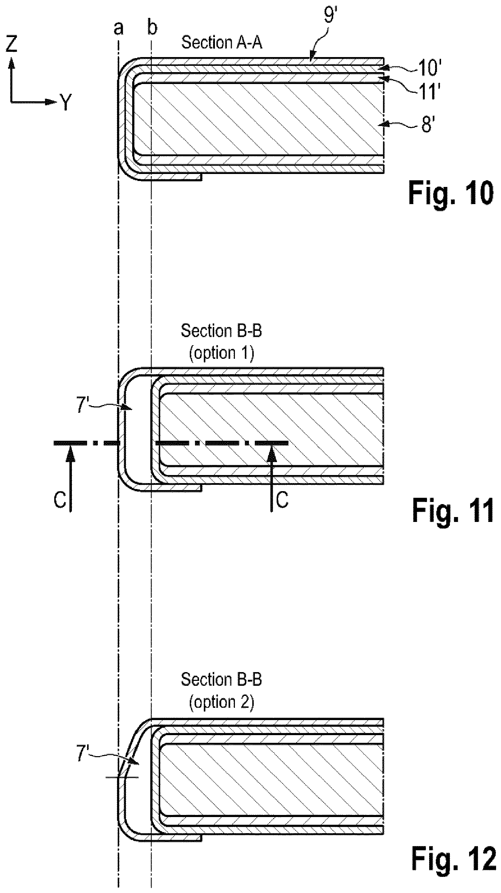

Figures 10 to 12 illustrate respective vertical section views along lines A-A and B-B of Figure 9, respectively, in which one of the deformable elements 7' of a side end of the load floor 1' can be seen in two different points: the first figure, i.e., Figure 10, illustrates a sectioned part of the load floor 1' in which there is no deformable element 7', whereas the subsequent two figures, i.e., Figures 11 and 12, show the same load floor 1' sectioned along a part in which there is a deformable element 7'. Figures 11 and 12 show two possible configuration options of the deformable element 7' according to the third embodiment of the invention, the first option in which the deformable element 7' has a regular section in the vertical direction "Z" and another option in which the deformable element 7' does not have a regular section in the vertical direction "Z", but rather has an inclined surface in the upper part. This inclined surface allows easing the pressure of contact between the deformable retaining element 7' and the respective protuberance, causing a progressive transition between a contactless situation and the overlap or maximum interference situation.

Similarly to the first embodiment shown in Figures 4 to 7, the load floor 1' according to the third embodiment is formed by a rigid inner substrate 8' at least partially covered by an intermediate layer 10' enveloping the rigid inner substrate 8' and in turn at least partially covered by an outer coating 9' enveloping the intermediate layer 10'. Furthermore, an additional glass fiber layer 11' is arranged between the rigid inner substrate 8' and the intermediate layer 10'.

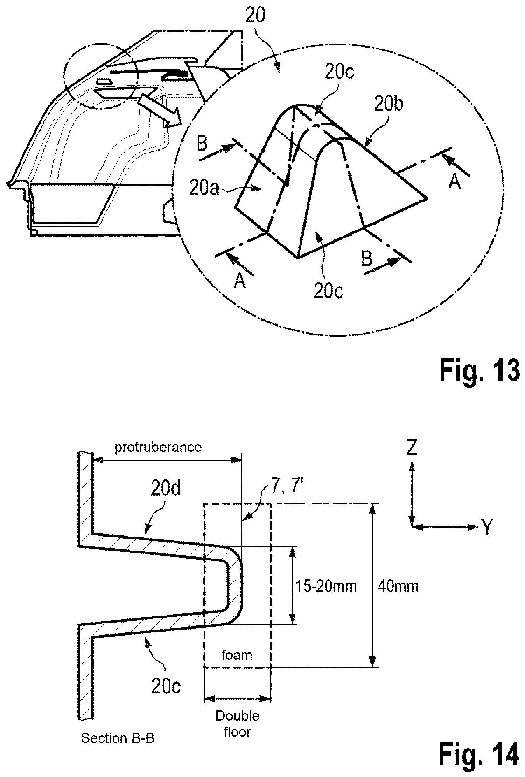

Figure 13 illustrates a side elevational view of part of the inner space of a vehicle trunk 30 incorporating the retaining system for retaining a load floor 1, 1' according to the present invention, in which a detail of a possible embodiment of the protuberance 20 object of the present invention generated in the left side wall 21 of the trunk 30 is provided in a perspective view. Said protuberance 20 is made from the same rigid material as the side walls 21 of the trunk 30 and is made up a body formed by two opposite first surfaces 20c, 20d and two opposite second surfaces 20a, 20b, wherein preferably all the surfaces 20c, 20d and 20a, 20b are inclined, particularly in direction "X" or in a direction perpendicular to the main surface of the load floor 1,1', with the load floor 1,1' being in contact with said protuberance. This inclined surface, which is particularly inclined in direction "X", allows easing the pressure of contact between the deformable retaining element 7' and the respective protuberance 20, causing a progressive transition between a contactless situation and the overlap or maximum interference situation.

Figure 14 illustrates a sectioned view along line B-B of the protuberance 20 of Figure 13 showing the two first surfaces 20c, 20d having a certain inclination with respect to axis "Y", which are of particular interest for removing the respective side wall of the trunk from the mold. Furthermore, it schematically illustrates (with discontinuous lines) the area of interference with the deformable element 7, 7' of the load floor 1, 1' in the moment in which both elements contact one another. In that sense, the right discontinuous line would schematically depict the left side end 3a of the load floor 1', where it is observed that there would be no interference with the protuberance 20. In contrast, the left discontinuous line would schematically depict the side end of the deformable retaining element 7', where the existence of interference with the protuberance 20 would be observed. As can be seen in this section B-B, the dimensions of the soft element 7, 7' are easily greater than the dimensions of the protuberance 29, so as to enable "absorbing it" completely when one overlaps the other (particularly in the preferred embodiment in which the soft element does not protrude and is arranged inside a side recess 12, 12' provided on each side end 3a, 3b of the load floor 1, 1').

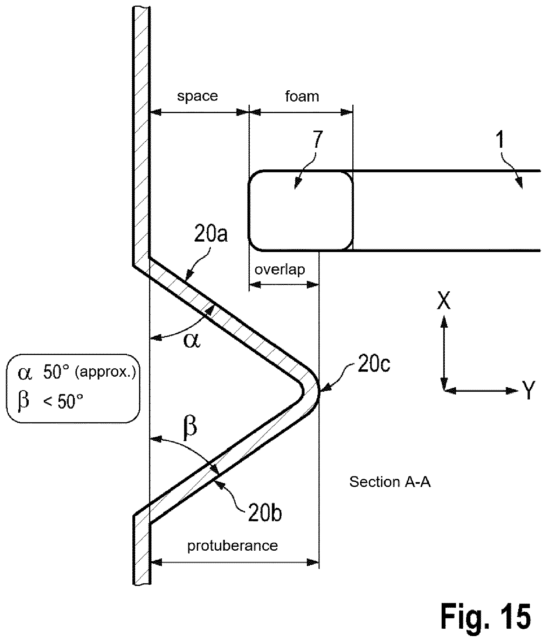

Furthermore, Figure 15 illustrates a sectioned view along line A-A of the protuberance 20 of Figure 13 showing the two second surfaces 20a, 20b having a certain inclination with respect to axis "Y". Furthermore, it illustrates an end part of the load floor 1, 1' in the moment before both elements contact to one another (load floor 1, 1' with protuberance 20).

In relation to the main dimensions, a table with the maximum and minimum nominal values of the deformable element 7, 7' ("foam"), of the protuberance 20, of the overlap between both elements, and the space in which there is no overlap in direction "Y", is provided. The possible values of the angle of inclination α between plane "X-Z" and the first ascending inclined wall 11a and the angle of inclination β between plane "X-Z" and the second descending inclined wall 11b are also provided.

| mm | space | overlap | foam | protuberance |
|---|---|---|---|---|
| NOMINAL | 3 (+/- 2.5) | 7.5 | 15 x 40 | 10.5 |
| maximum | 5.5 | 5 | 15 x 40 | 10.5 |
| minimum | 0.5 | 10 | 15 x 40 | 10.5 |

Preferably, the angle of inclination β between plane "X-Z" and the second descending inclined wall 20b and the angle of inclination β between plane "X-Z" and the second descending inclined wall 20b of the protuberance 20 are different. Preferably, the angle of inclination α is of about 50° and the angle of inclination β is less than 50°.

Preferably, a rounded connection area 20c is formed between the two second inclined surfaces 20a, 20b.

Preferably, the height in direction "Y" of each respective protuberance 20 is comprised between 10 and 20 mm.

The dimensions (height in direction "Y", angle of inclination α between plane "X-Z", angle of inclination β between plane "X-Z" and the second descending inclined wall 20b) of the protuberance 20 shown in the accompanying Figures 13 to 15 are an example which ensures an overlap, and therefore retention, taking into account the dimensional variability of all the components, but these dimensions may vary.

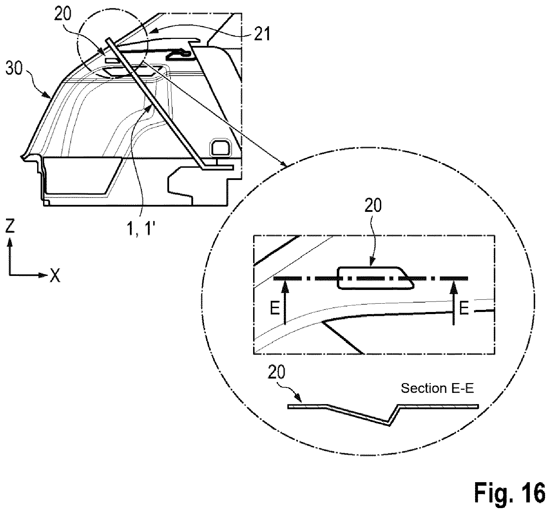

Figure 16 provides a detail of a possible embodiment of the protuberance 20 generated in the side wall of the trunk 30 object of the present invention and also a section along line E-E of the side wall 21 of the trunk at the retention point. As can be seen, the contact wall of the protuberance 20 with the load floor 1,1' in the second usage position (right wall) comprises an inclination substantially greater than the contact wall of the protuberance 20 with the load floor 1,1' for releasing said second usage position (left wall). Adjusting the inclination in direction "Y" allows modifying the contact force that must be exerted by the user.

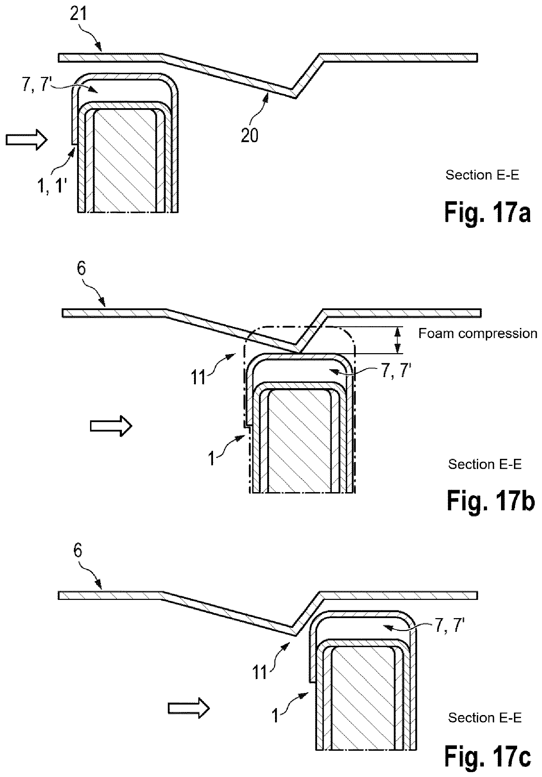

Figures 17a to 17c are respective sectioned side elevational views of the interior of a vehicle trunk 30 of Figure 16 at the retention point, and incorporating the retaining system for retaining a load floor 1, 1' according to the present invention, in three different positions of movement from the first usage position to the second usage position in order to show the operation and compression of the deformable element 7, 7'.

In the pivoting movement of the load floor 1, 1' in the trunk 30, the deformable element 7, 7' of the load floor 1, 1' is deformed by the pressure exerted by the user. It recovers its position once overcoming the rigid protuberance 20 of the side wall 21 of the trunk 30. Said deformable material of the deformable elements 7, 7' is calculated so that there is a deformation when the floor is supported in the inclined position on the protuberances 20 of the wall. In that sense, the load floor 1, 1' can be supported and maintain said inclined second usage position.

Specifically, Figure 17a illustrates when the load floor 1, 1' is arranged right before the protuberance 20, with there being no contact or interference between both. The subsequent figure, i.e., Figure 17b, depicts when the load floor is at the point of maximum interference between the protuberance 20 and the deformable retaining element 7, 7'. Lastly, Figure 17c depicts when the load floor 1, 1 has already moved passed the protuberance 20 and is securely arranged in said second usage position. Figure 17b clearly shows that the deformable element 7, 7' is in a compression state, whereas in the other two figures, i.e., Figures 17a and 17c, said element is in a non-compression state. In said second usage position, i.e., the position depicted in Figure 17c, deformation of the deformable retaining element 7, 7' may occur due to the weight of the load floor 1, 1' itself. However, despite said deformation, an interference should still exist between the deformable retaining element 7, 7' and the protuberance 20, ensuring the support of the load floor 1, 1' in said second usage position.

It is important to mention that the position of the protuberance 20 in the side wall 21 of the trunk 30 and the position of the deformable element 7, 7' must coincide in the ascending and descending movements of the double floor 1, 1'. In the event of contact between the protuberance 20 and an area of the side end of the hard double floor (i.e., not in the deformable elements 7, 7'), there would be no deformation and no further movement would be possible.

Figures 18 and 19 depict two respective diagrams of the different steps constituting two methods of obtaining the double floor 1, 1' of the present invention with the deformable elements 7, 7' covered by the outer coating. In all the different consecutive steps illustrated, the double floor 1, 1' is depicted in a top plan view in which the two side recesses in which the deformable retaining elements 7, 7' are located can be seen. Said method of manufacturing comprises the following four steps:
- step 1: obtaining a rigid inner substrate 8, 8' of the load floor 1, 1',
- step 2: obtaining at least two deformable retaining elements 7, 7', one for each side,
- step 3: inserting a deformable retaining element 7, 7' into each side end of the rigid substrate 8, 8', and
- step 4: at least partially coating, with the outer coating 9, 9', the rigid substrate 8, 8' with the two retaining elements 7, 7' already arranged in each respective side end of said rigid substrate 8, 8'.

According to a first alternative shown in Figure 18, the step of obtaining at least two deformable retaining elements 7, 7' is different from the process of obtaining the rigid inner substrate 8, 8' of the load floor 1, 1' and it can be seen in the fourth and last station of Figure 18 how a soft PUR foam is incorporated in each of the positions of each side wall of the double floor 1, 1' before the step of coating with the outer coating 9, 9'. In that sense, polyol and isocyanate are applied in the first step by spraying in order to obtain the PUR structure of the load floor 1, 1'. Molding is performed in the second station, causing PUR to react and expand inside the mold in order to obtain the desired geometry of the load floor 1, 1'. In the third station, said load floor 1, 1' is moved to the fourth station with the already expanded PUR material. In said last step, the deformable retaining elements 7, 7', in addition to the handle, are assembled, being positioned with respect to the load floor 1, 1'. An additional adhesive application step can be performed. Lastly, the coating operation is performed.

Furthermore, the alternative method illustrated in Figure 19 differs from the preceding method in the attainment of soft deformable elements 7, 7' of the double floor 1, 1' which is performed in the same mold in which PUR foam is applied by spraying and expands, by locally applying PUR of different formulations in order to achieve the soft effect in a step additional to that of the rigid inner element 8, 8' of the load floor 1, 1', before the step of coating with the outer coating 9, 9'. In that sense, polyol and isocyanate are applied in the first step by spraying in order to obtain the PUR structure of the load floor 1, 1'. Molding is performed in the second station, causing PUR to react and expand inside the mold in order to obtain the desired geometry of the load floor 1, 1'. In parallel, the PUR material of the soft deformable element corresponding to the deformable retaining elements 7, 7' is applied by spraying. Molding is performed in the third station, causing the soft deformable PUR to react and expand inside the mold in order to obtain the desired geometry of the deformable retaining elements 7, 7'. Next, said load floor 1, 1' is moved to the fourth station with the already expanded PUR material. The handle, if any, is assembled in said last step, being positioned with respect to the load floor 1, 1'. Lastly, the coating operation is performed.

Despite having referred to a specific embodiment of the invention, it is evident for a person skilled in the art that the retaining system for retaining a load floor for a vehicle trunk and the method of manufacturing the load floor described above are susceptible to a number of variations and modifications, and that all the mentioned details can be replaced with other technically equivalent ones without departing from the scope of protection defined by the attached claims.

## Claims

1. A retaining system for retaining a load floor (1, 1') for a vehicle trunk, comprising:
- a load floor (1, 1') with a rigid structure, comprising at least one rigid substrate (8, 8') and an outer coating (9, 9') at least partially covering the rigid substrate (8, 8'), wherein the load floor (1, 1') has two side ends, opposite one another, a front end and a rear end, opposite the front end, wherein the load floor (1, 1') can be pivoted from a first usage position, with the load floor (1, 1') being arranged forming a substantially horizontal surface, to a second usage position, with the load floor (1, 1') being at least partially arranged with an inclination with respect to the first usage position, such that it allows a user to access a lower area with respect to the load floor (1, 1'), and
- respective inner side walls (21) of the trunk (30), manufactured from a rigid material,
and wherein the retaining system retains the load floor (1, 1') in the second usage position, the retaining system being **characterized in that:**
each inner side wall (21) of the trunk (30) comprises at least one respective protuberance (20) configured and arranged for acting by way of a stop in order to retain the load floor (1, 1') in the second usage position, and wherein each protuberance (20) is manufactured from the same rigid material as the respective inner side wall (21) of the trunk (30);
wherein the load floor (1, 1') comprises at least one retaining element (7, 7') arranged on each of the two side ends of said load floor (1, 1'), wherein the outer coating (9, 9') of the load floor (1, 1') covers said at least one retaining element (7, 7'), said at least one retaining element (7, 7') being manufactured in a deformable material, wherein each deformable retaining element (7, 7') is arranged and configured for:
- contacting a respective protuberance (20) in the pivoting movement of the load floor (1, 1') in the trunk (30) from the first usage position to the second usage position, or from the second usage position to the first usage position, and deforming, in at least a part of each deformable retaining element (7, 7') corresponding to an overlap area with the respective protuberance (20) in direction "Y" corresponding to the width of the vehicle, by a pressure greater than or equal to a predefined value exerted in contact with the respective protuberance (20),
- recovering its initial geometry once contact with the respective protuberance (20) in the pivoting movement of the load floor (1, 1') in the trunk (30) from the first usage position to the second usage position, or from the second usage position to the first usage position, has ended, and
- contacting a respective protuberance (20), with the load floor (1, 1') being in the second usage position, and substantially maintaining its initial geometry if the pressure value resulting from contact with the respective protuberance (20) is less than a predefined pressure value.

2. The retaining system for retaining a load floor (1, 1') for a vehicle trunk according to claim 1, wherein each deformable retaining element (7, 7') of the load floor (1, 1') is arranged on the respective side end of the load floor (1, 1') such that contact with the at least one protuberance (20) only occurs with the respective deformable retaining element (7, 7') of the load floor (1, 1') in a pivoting movement pivotably between the first usage position and the second usage position or vice versa.

3. The retaining system for retaining a load floor (1, 1') for a vehicle trunk according to any of the preceding claims, wherein the respective deformable retaining elements (7) of the load floor (1, 1') are arranged in a side recess (12, 12') provided on each side end of the load floor (1, 1'), wherein said deformable retaining elements (7, 7') do not protrude in direction "Y" towards the side walls (21) of the trunk (30) with respect to the respective side end of the load floor(1, 1').

4. The retaining system for retaining a load floor (1, 1') for a vehicle trunk according to any of claims 1 or 2, wherein the respective deformable retaining elements (7') of the load floor (1, 1') are arranged protruding in direction "Y" towards the side walls (21) of the trunk (30) with respect to the respective side end of the load floor (1, 1 ').

5. The retaining system for retaining a load floor (1, 1') for a vehicle trunk according to any of claims 1 or 2, wherein the respective deformable retaining elements (7') of the load floor (1, 1') are arranged in a side recess (12, 12') provided on each side end of the load floor (1, 1'), wherein said deformable retaining elements (7, 7') protrude in direction "Y" towards the side walls (21) of the trunk (30) with respect to the respective side end of the load floor (1, 1').

6. The retaining system for retaining a load floor (1, 1') for a vehicle trunk according to any of claims 4 or 5, wherein the depth in direction "Y" of each deformable retaining element (7, 7') is variable, such that the contact areas with the respective protuberance (20) comprise an inclined surface increasing the depth of the retaining element (7, 7') up to a central area of maximum depth in said direction "Y".

7. The retaining system for retaining a load floor (1, 1') for a vehicle trunk according to any of the preceding claims, wherein the deformable material of the respective retaining elements (7, 7') of the load floor (1, 1') is incorporated in the respective areas of the load floor (1, 1') during the process of constructing the load floor (1, 1') and are integrated in the load floor (1, 1').

8. The retaining system for retaining a load floor (1, 1') for a vehicle trunk according to any of the preceding claims, wherein the deformable material of the respective retaining elements (7, 7') of the load floor (1, 1') comprises a soft foam incorporated during the process of constructing the load floor (1, 1').

9. The retaining system for retaining a load floor (1, 1') for a vehicle trunk according to claim 8, wherein the soft foam is a polyurethane (PUR) foam with a density comprised between 144 and 176 kg/m³ and a compressive force comprised between 14.4 and 21.6 KPa.

10. The retaining system for retaining a load floor (1, 1') for a vehicle trunk according to any of the preceding claims, wherein the load floor (1, 1') comprises a rigid inner substrate (8, 8'), at least partially covered by an intermediate layer (10, 10') enveloping the rigid inner substrate (8, 8') and in turn at least partially covered by an outer coating (9, 9') enveloping the intermediate layer (10, 10').

11. A vehicle trunk (30) comprising a retaining system for retaining a load floor (1, 1') according to any of claims 1 to 10.

12. A method of manufacturing the retaining system for retaining a load floor (1, 1') for a vehicle trunk according to any of claims 1 to 10, comprising the steps of:
- obtaining a rigid substrate (8, 8'), generating the rigid structure of the load floor (1, 1'),
- obtaining at least one deformable retaining element (7, 7'),
- inserting the at least one deformable retaining element (7, 7') into the respective side end of said rigid substrate (8, 8'), and
- at least partially coating, with the outer coating (9, 9'), the rigid substrate (8, 8') with the at least one retaining element (7, 7') arranged on the respective side end of said rigid substrate (8, 8').

13. The method of manufacturing a load floor (1, 1') for a vehicle trunk according to claim 12, wherein the step of obtaining the at least one deformable retaining element (7, 7') is by means of a manufacturing step other than the process of obtaining the rigid substrate (8, 8'), such that the step of inserting the at least one deformable retaining element (7, 7') comprises adding said at least one retaining element (7, 7') to the rigid substrate before the step of coating with the outer coating (9, 9').

14. The method of manufacturing a load floor (1, 1') for a vehicle trunk according to claim 13, wherein the step of obtaining and inserting the at least one deformable retaining element (7, 7') is by means of a single step of applying the deformable material forming the at least one retaining element (7, 7') by spraying on the respective side end of said rigid substrate (8, 8') before the step of coating with the outer coating (9, 9').

## Patentansprüche

1. Haltesystem zum Halten eines Ladebodens (1, 1') für einen Fahrzeugkofferraum, umfassend:
- einen Ladeboden (1, 1') mit einer starren Struktur, umfassend mindestens ein starres Substrat (8, 8') und eine äußere Beschichtung (9, 9'), die das starre Substrat (8, 8') mindestens teilweise bedeckt, wobei der Ladeboden (1, 1') zwei, einander gegenüberliegende, seitliche Enden, ein vorderes Ende und ein, dem vorderen Ende gegenüberliegendes, hinteres Ende aufweist, wobei der Ladeboden (1, 1') von einer ersten Gebrauchsposition, in der der Ladeboden (1, 1') so angeordnet ist, dass er eine im Wesentlichen horizontale Fläche bildet, in eine zweite Gebrauchsposition geschwenkt werden kann, in der der Ladeboden (1, 1') mindestens teilweise geneigt in Bezug auf die erste Gebrauchsposition angeordnet ist, so dass sie einem Benutzer den Zugang zu einem niedrigeren Bereich in Bezug auf den Ladeboden (1, 1') ermöglicht, und
- jeweilige innere Seitenwände (21) des Kofferraums (30), die aus einem starren Material hergestellt sind,
und wobei das Haltesystem den Ladeboden (1,1') in der zweiten Gebrauchsposition hält, wobei das Haltesystem **dadurch gekennzeichnet ist, dass:**
jede innere Seitenwand (21) des Kofferraums (30) mindestens eine jeweilige Ausstülpung (20) umfasst, die konfiguriert und angeordnet ist, um als Anschlag zu wirken, um den Ladeboden (1, 1') in der zweiten Gebrauchsposition zu halten, und wobei jede Ausstülpung (20) aus demselben starren Material wie die jeweilige innere Seitenwand (21) des Kofferraums (30) hergestellt ist;
wobei der Ladeboden (1, 1') mindestens ein Halteelement (7, 7') umfasst, das an jedem der zwei seitlichen Enden des Ladebodens (1, 1') angeordnet ist, wobei die äußere Beschichtung (9, 9') des Ladebodens (1, 1') das mindestens eine Halteelement (7, 7') bedeckt, wobei das mindestens eine Halteelement (7, 7') aus einem verformbaren Material hergestellt ist, wobei jedes verformbare Halteelement (7, 7') angeordnet und konfiguriert ist zum:
- Kontaktieren einer jeweiligen Ausstülpung (20) in der Schwenkbewegung des Ladebodens (1, 1') im Kofferraum (30) von der ersten Gebrauchsposition zur zweiten Gebrauchsposition oder von der zweiten Gebrauchsposition zur ersten Gebrauchsposition und Verformen in mindestens einem Teil jedes verformbaren Halteelements (7, 7'), das einem Überlappungsbereich mit der jeweiligen Ausstülpung (20) in Richtung "Y" entspricht, die der Breite des Fahrzeugs entspricht, durch einen Druck, der größer als oder gleich einem vordefinierten Wert ist, der in Kontakt mit der jeweiligen Ausstülpung (20) ausgeübt wird,
- Wiederherstellen seiner anfänglichen Geometrie, sobald der Kontakt mit der jeweiligen Ausstülpung (20) in der Schwenkbewegung des Ladebodens (1, 1') im Kofferraum (30) von der ersten Gebrauchsposition zur zweiten Gebrauchsposition oder von der zweiten Gebrauchsposition zur ersten Gebrauchsposition beendet ist, und
- Kontaktieren einer jeweiligen Ausstülpung (20), wobei sich der Ladeboden (1, 1') in der zweiten Gebrauchsposition befindet und im Wesentlichen seine anfängliche Geometrie beibehält, wenn der Druckwert, der sich aus dem Kontakt mit der jeweiligen Ausstülpung (20) ergibt, geringer ist als ein vordefinierter Druckwert.

2. Haltesystem zum Halten eines Ladebodens (1, 1') für einen Fahrzeugkofferraum nach Anspruch 1, wobei jedes verformbare Halteelement (7, 7') des Ladebodens (1, 1') an dem jeweiligen seitlichen Ende des Ladebodens (1, 1') so angeordnet ist, dass ein Kontakt mit der mindestens einen Ausstülpung (20) nur dann erfolgt, wenn sich das jeweilige verformbare Halteelement (7, 7') des Ladebodens (1, 1') in einer Schwenkbewegung schwenkbar zwischen der ersten Gebrauchsposition und der zweiten Gebrauchsposition oder umgekehrt befindet.

3. Haltesystem zum Halten eines Ladebodens (1, 1') für einen Fahrzeugkofferraum nach einem der vorstehenden Ansprüche, wobei die jeweiligen verformbaren Halteelemente (7) des Ladebodens (1, 1') in einer seitlichen Aussparung (12, 12') angeordnet sind, die an jedem seitlichen Ende des Ladebodens (1, 1') vorgesehen ist, wobei die verformbaren Halteelemente (7, 7') in Richtung "Y" nicht zu den Seitenwänden (21) des Kofferraums (30) in Bezug auf das jeweilige seitliche Ende des Ladebodens (1, 1') vorstehen.

4. Haltesystem zum Halten eines Ladebodens (1, 1') für einen Fahrzeugkofferraum nach einem der Ansprüche 1 oder 2, wobei die jeweiligen verformbaren Halteelemente (7') des Ladebodens (1, 1') in Richtung "Y" zu den Seitenwänden (21) des Kofferraums (30) in Bezug auf das jeweilige seitliche Ende des Ladebodens (1, 1') vorstehend angeordnet sind.

5. Haltesystem zum Halten eines Ladebodens (1, 1') für einen Fahrzeugkofferraum nach einem der Ansprüche 1 oder 2, wobei die jeweiligen verformbaren Halteelemente (7') des Ladebodens (1, 1') in einer seitlichen Aussparung (12, 12') angeordnet sind, die an jedem seitlichen Ende des Ladebodens (1, 1') vorgesehen ist, wobei die verformbaren Halteelemente (7, 7') in Richtung "Y" zu den Seitenwänden (21) des Kofferraums (30) in Bezug auf das jeweilige seitliche Ende des Ladebodens (1, 1') vorstehen.

6. Haltesystem zum Halten eines Ladebodens (1, 1') für einen Fahrzeugkofferraum nach einem der Ansprüche 4 oder 5, wobei die Tiefe in Richtung "Y" jedes verformbaren Halteelements (7, 7') variabel ist, so dass die Kontaktflächen mit der jeweiligen Ausstülpung (20) eine geneigte Fläche umfassen, die die Tiefe des Halteelements (7, 7') bis zu einem zentralen Bereich mit maximaler Tiefe in der Richtung "Y" erhöht.

7. Haltesystem zum Halten eines Ladebodens (1, 1') für einen Fahrzeugkofferraum nach einem der vorstehenden Ansprüche, wobei das verformbare Material der jeweiligen Halteelemente (7, 7') des Ladebodens (1, 1') in die jeweiligen Bereiche des Ladebodens (1, 1') während des Prozesses des Aufbaus des Ladebodens (1, 1') eingearbeitet und in den Ladeboden (1, 1') integriert wird.

8. Haltesystem zum Halten eines Ladebodens (1, 1') für einen Fahrzeugkofferraum nach einem der vorstehenden Ansprüche, wobei das verformbare Material der jeweiligen Halteelemente (7, 7') des Ladebodens (1, 1') einen Weichschaum umfasst, der während des Prozesses des Aufbaus des Ladebodens (1, 1') eingearbeitet wird.

9. Haltesystem zum Halten eines Ladebodens (1, 1') für einen Fahrzeugkofferraum nach Anspruch 8, wobei der Weichschaum ein Polyurethan(PUR)-Schaum mit einer Dichte zwischen 144 und 176 kg/m³ und einer Druckkraft zwischen 14,4 und 21,6 kPa ist.

10. Haltesystem zum Halten eines Ladebodens (1, 1') für einen Fahrzeugkofferraum nach einem der vorstehenden Ansprüche, wobei der Ladeboden (1, 1') ein starres inneres Substrat (8, 8') umfasst, das mindestens teilweise von einer Zwischenschicht (10, 10') bedeckt ist, die das starre innere Substrat (8, 8') umhüllt und ihrerseits mindestens teilweise von einer äußeren Beschichtung (9, 9') bedeckt ist, die die Zwischenschicht (10, 10') umhüllt.

11. Kofferraum (30), umfassend ein Haltesystem zum Halten eines Ladebodens (1, 1') nach einem der Ansprüche 1 bis 10.

12. Verfahren zum Herstellen des Haltesystems zum Halten eines Ladebodens (1, 1') für einen Fahrzeugkofferraum nach einem der Ansprüche 1 bis 10, umfassend die Schritte zum:
- Erhalten eines starren Substrats (8, 8'), wodurch die starre Struktur des Ladebodens (1, 1') erzeugt wird,
- Erhalten mindestens eines verformbaren Halteelements (7, 7'),
- Einsetzen des mindestens einen verformbaren Halteelements (7, 7') in das jeweilige seitliche Ende des starren Substrats (8, 8'), und
- mindestens teilweises Beschichten, mit der äußeren Beschichtung (9, 9'), des starren Substrats (8, 8') mit dem mindestens einen Halteelement (7, 7'), das an dem jeweiligen seitlichen Ende des starren Substrats (8, 8') angeordnet ist.

13. Verfahren zur Herstellung eines Ladebodens (1, 1') für einen Fahrzeugkofferraum nach Anspruch 12, wobei der Schritt des Erhaltens des mindestens einen verformbaren Halteelements (7, 7') mittels eines Herstellungsschritts erfolgt, der sich von dem Prozess des Erhaltens des starren Substrats ( 8, 8') unterscheidet, so dass der Schritt des Einsetzens des mindestens einen verformbaren Halteelements (7, 7') Hinzufügen des mindestens einen Halteelements (7, 7') zu dem starren Substrat vor dem Schritt des Beschichtens mit der äußeren Beschichtung (9, 9') umfasst.

14. Verfahren zur Herstellung eines Ladebodens (1, 1') für einen Fahrzeugkofferraum nach Anspruch 13, wobei der Schritt des Erhaltens und Einsetzens des mindestens einen verformbaren Halteelements (7, 7') mittels eines einzigen Schritts zum Aufbringen des das mindestens eine Halteelement (7, 7') bildenden verformbaren Materials durch Aufsprühen auf das jeweilige seitliche Ende des starren Substrats (8, 8') vor dem Schritt des Beschichtens mit der äußeren Beschichtung (9, 9') erfolgt.

## Revendications

1. Système de retenue pour retenir un plancher de chargement (1, 1') pour un coffre de véhicule, comprenant :
- un plancher de chargement (1, 1') avec une structure rigide, comprenant au moins un substrat rigide (8, 8') et un revêtement extérieur (9, 9') recouvrant au moins partiellement le substrat rigide (8, 8'), dans lequel le plancher de chargement (1, 1') présente deux extrémités latérales, opposées l'une à l'autre, une extrémité avant et une extrémité arrière, opposée à l'extrémité avant, dans lequel le plancher de chargement (1, 1') peut pivoter d'une première position d'utilisation, avec le plancher de chargement (1, 1') étant agencé de manière à former une surface sensiblement horizontale, à une seconde position d'utilisation, avec le plancher de chargement (1, 1') étant au moins partiellement agencé avec une inclinaison par rapport à la première position d'utilisation, de sorte qu'il permet à un utilisateur d'accéder à une zone inférieure par rapport au plancher de chargement (1, 1'), et
- des parois latérales intérieures respectives (21) du coffre (30), fabriquées à partir d'un matériau rigide,
et dans lequel le système de retenue retient le plancher de chargement (1, 1') dans la seconde position d'utilisation, le système de retenue étant **caractérisé en ce que** :
chaque paroi latérale intérieure (21) du coffre (30) comprend au moins une protubérance respective (20) configurée et agencée pour agir au moyen d'une butée afin de retenir le plancher de chargement (1, 1') dans la seconde position d'utilisation, et dans lequel chaque protubérance (20) est fabriquée à partir du même matériau rigide que la paroi latérale intérieure respective (21) du coffre (30) ;
dans lequel le plancher de chargement (1, 1') comprend au moins un élément de retenue (7, 7') agencé sur chacune des deux extrémités latérales dudit plancher de chargement (1, 1'), dans lequel le revêtement extérieur (9, 9') du plancher de chargement (1, 1') recouvre ledit au moins un élément de retenue (7, 7'), ledit au moins un élément de retenue (7, 7') étant fabriqué dans un matériau déformable, dans lequel chaque élément de retenue déformable (7, 7') est agencé et configuré pour :
- entrer en contact avec une protubérance respective (20) dans le mouvement de pivotement du plancher de chargement (1, 1') dans le coffre (30) de la première position d'utilisation à la seconde position d'utilisation, ou de la seconde position d'utilisation à la première position d'utilisation, et se déformer, dans au moins une partie de chaque élément de retenue déformable (7, 7') correspondant à une zone de chevauchement avec la protubérance respective (20) dans la direction « Y » correspondant à la largeur du véhicule, par une pression supérieure ou égale à une valeur prédéfinie exercée au contact de la protubérance respective (20),
- retrouver sa géométrie initiale une fois que le contact avec la protubérance respective (20) dans le mouvement de pivotement du plancher de chargement (1, 1') dans le coffre (30) de la première position d'utilisation à la seconde position d'utilisation, ou de la seconde position d'utilisation à la première position d'utilisation, prend fin, et
- entrer en contact avec une protubérance respective (20), avec le plancher de chargement (1, 1') étant dans la seconde position d'utilisation, et conserver sensiblement sa géométrie initiale si la valeur de pression résultant du contact avec la protubérance respective (20) est inférieure à une valeur de pression prédéfinie.

2. Système de retenue pour retenir un plancher de chargement (1, 1') pour un coffre de véhicule selon la revendication 1, dans lequel chaque élément de retenue déformable (7, 7') du plancher de chargement (1, 1') est agencé sur l'extrémité latérale respective du plancher de chargement (1, 1') de sorte qu'un contact avec la au moins une protubérance (20) ne se produise avec l'élément de retenue déformable respectif (7, 7') du plancher de chargement (1, 1') que dans un mouvement de pivotement de manière pivotante entre la première position d'utilisation et la seconde position d'utilisation ou vice versa.

3. Système de retenue pour retenir un plancher de chargement (1, 1') pour un coffre de véhicule selon l'une quelconque des revendications précédentes, dans lequel les éléments de retenue déformables respectifs (7) du plancher de chargement (1, 1') sont agencés dans un évidement latéral (12, 12') ménagé sur chaque extrémité latérale du plancher de chargement (1, 1'), dans lequel lesdits éléments de retenue déformables (7, 7') ne font pas saillie dans la direction « Y » vers les parois latérales (21) du coffre (30) par rapport à l'extrémité latérale respective du plancher de chargement (1, 1').

4. Système de retenue pour retenir un plancher de chargement (1, 1') pour un coffre de véhicule selon l'une quelconque des revendications 1 ou 2, dans lequel les éléments de retenue déformables respectifs (7') du plancher de chargement (1, 1') sont agencés en saillie dans la direction « Y » vers les parois latérales (21) du coffre (30) par rapport à l'extrémité latérale respective du plancher de chargement (1, 1').

5. Système de retenue pour retenir un plancher de chargement (1, 1') pour un coffre de véhicule selon l'une quelconque des revendications 1 ou 2, dans lequel les éléments de retenue déformables respectifs (7') du plancher de chargement (1, 1') sont agencés dans un évidement latéral (12, 12') ménagé sur chaque extrémité latérale du plancher de chargement (1, 1'), dans lequel lesdits éléments de retenue déformables (7, 7') font saillie dans la direction « Y » vers les parois latérales (21) du coffre (30) par rapport à l'extrémité latérale respective du plancher de chargement (1, 1').

6. Système de retenue pour retenir un plancher de chargement (1, 1') pour un coffre de véhicule selon l'une quelconque des revendications 4 ou 5, dans lequel la profondeur dans la direction « Y » de chaque élément de retenue déformable (7, 7') est variable, de sorte que les zones de contact avec la protubérance respective (20) comprennent une surface inclinée augmentant la profondeur de l'élément de retenue (7, 7') jusqu'à une zone centrale de profondeur maximale dans ladite direction « Y ».

7. Système de retenue pour retenir un plancher de chargement (1, 1') pour un coffre de véhicule selon l'une quelconque des revendications précédentes, dans lequel le matériau déformable des éléments de retenue respectifs (7, 7') du plancher de chargement (1, 1') est incorporé dans les zones respectives du plancher de chargement (1, 1') pendant le processus de construction du plancher de chargement (1, 1') et est intégré dans le plancher de chargement (1, 1').

8. Système de retenue pour retenir un plancher de chargement (1, 1') pour un coffre de véhicule selon l'une quelconque des revendications précédentes, dans lequel le matériau déformable des éléments de retenue respectifs (7, 7') du plancher de chargement (1, 1') comprend une mousse souple incorporée pendant le processus de construction du plancher de chargement (1, 1').

9. Système de retenue pour retenir un plancher de chargement (1, 1') pour un coffre de véhicule selon la revendication 8, dans lequel la mousse souple est une mousse de polyuréthane (PUR) avec une densité comprise entre 144 et 176 kg/m³ et une force de compression comprise entre 14,4 et 21,6 kPa.

10. Système de retenue pour retenir un plancher de chargement (1, 1') pour un coffre de véhicule selon l'une quelconque des revendications précédentes, dans lequel le plancher de chargement (1, 1') comprend un substrat intérieur rigide (8, 8'), au moins partiellement recouvert par une couche intermédiaire (10, 10') enveloppant le substrat intérieur rigide (8, 8') et à son tour au moins partiellement recouvert par un revêtement extérieur (9, 9') enveloppant la couche intermédiaire (10, 10').

11. Coffre de véhicule (30) comprenant un système de retenue pour retenir un plancher de chargement (1, 1') selon l'une quelconque des revendications 1 à 10.

12. Procédé de fabrication du système de retenue pour retenir un plancher de chargement (1, 1') pour un coffre de véhicule selon l'une quelconque des revendications 1 à 10, comprenant les étapes de :
- obtention d'un substrat rigide (8, 8'), formant la structure rigide du plancher de charge (1, 1'),
- obtention d'au moins un élément de retenue déformable (7, 7'),
- insertion du au moins un élément de retenue déformable (7, 7') dans l'extrémité latérale respective dudit substrat rigide (8, 8'), et
- application au moins partielle du revêtement extérieur (9, 9') sur le substrat rigide (8, 8'), le au moins un élément de retenue (7, 7') étant agencé sur l'extrémité latérale respective dudit substrat rigide (8, 8').

13. Procédé de fabrication d'un plancher de chargement (1, 1') pour un coffre de véhicule selon la revendication 12, dans lequel l'étape d'obtention du au moins un élément de retenue déformable (7, 7') s'effectue au moyen d'une étape de fabrication autre que le processus d'obtention du substrat rigide (8, 8'), de sorte que l'étape d'insertion du au moins un élément de retenue déformable (7, 7') comprend l'ajout dudit au moins un élément de retenue (7, 7') au substrat rigide avant l'étape d'application du revêtement extérieur (9, 9').

14. Procédé de fabrication d'un plancher de chargement (1, 1') pour un coffre de véhicule selon la revendication 13, dans lequel l'étape d'obtention et d'insertion du au moins un élément de retenue déformable (7, 7') s'effectue au moyen d'une seule étape d'application du matériau déformable formant le au moins un élément de retenue (7, 7') par pulvérisation sur l'extrémité latérale respective dudit substrat rigide (8, 8') avant l'étape d'application du revêtement extérieur (9, 9').
